Europäisches Patentamt

European Patent Office

Office européen des brevets

(19)

(11) Veröffentlichungsnummer: **0 178 588**
**B1**

(12) **EUROPÄISCHE PATENTSCHRIFT**

(45) Veröffentlichungstag der Patentschrift: **27.12.90**

(21) Anmeldenummer: **85112828.0**

(22) Anmeldetag: **10.10.85**

(51) Int. Cl.⁵: **G 11 B 5/712,** G 11 B 5/706, H 01 F 1/11

(54) **Ferrimagnetische Teilchen und Verfahren zu ihrer Herstellung.**

(30) Priorität: **18.10.84 DE 3438093**

(43) Veröffentlichungstag der Anmeldung:
**23.04.86 Patentblatt 86/17**

(45) Bekanntmachung des Hinweises auf die
Patenterteilung:
**27.12.90 Patentblatt 90/52**

(84) Benannte Vertragsstaaten:
**DE FR GB NL**

(56) Entgegenhaltungen:
**EP-A-0 014 903**
**DE-A-2 410 517**
**DE-B-2 235 383**

(73) Patentinhaber: **BASF Aktiengesellschaft**
**Carl-Bosch-Strasse 38**
**D-6700 Ludwigshafen (DE)**

(72) Erfinder: **Steck, Werner, Dr.**
**Auerstrasse 4**
**D-6700 Ludwigshafen (DE)**
Erfinder: **Jakusch, Helmut, Dr.**
**Lorscher Ring 6c**
**D-6710 Frankenthal (DE)**

# EP 0 178 588 B1

**Beschreibung**

Die Erfindung betrifft ferrimagnetische Teilchen, welche sich als magnetisches Material für magnetische Aufzeichnungsträger eignen sowie ein Verfahren zur Herstellung dieser Teilchen.

Die Entwicklung bei magnetischen Aufzeichnungsträger zu immer höheren Speicherdichten sowie zu einer stetigen Vergrößerung des Signal-Rauschabstandes erfordert magnetische Aufzeichnungsschichten mit weiter vergrößerten Koerzitivfeldstärken. Als hierfür geeignet sind bereits eine Reihe von kobaltmodifizierten Eisenoxiden vorgeschlagen worden. In Abhängigkeit von der Art der Kobaltmodifikation lassen sich die resultierenden Produkte bezüglich ihrer magnetischen Anisotropie entweder einem multiaxialen oder uniaxialen Verhalten zuordnen.

Multiaxiale, d.h. bezüglich ihrer magnetischen Anisotropie mehrachsige Teilchen sind seit langem bekannt. Sie bestehen aus im Teilchenvolumen mit Kobalt(II) gleichmäßig dotiertem $FeO_x$ mit Werten von x zwischen 1,33 und 1,5. Solche Teilchensysteme weisen eine starke thermische Abhängigkeit wichtiger magnetischer Eigenschaften, wie z.B. von Koerzitivfeldstärke und Remanenz auf. Darüber hinaus bewirken derartige magnetische Materialien in magnetischen Aufzeichnungsschichten eine Verschlechterung der Kopierdämpfung und einen Pegelabfall durch magnetostriktive Effekte. Die Herstellung von Eisenoxidteilchen mit einer Kobaltvolumendotierung ist bekannt und u.a. in der DE—PS 1 226 997, der DE—AS 22 21 218 sowie der DE—OS 27 10 776 beschrieben.

Zur Beseitigung der bekannten Mängel der Multiaxialteilchen sind höherkoerzitive Eisenoxide entwickelt worden, die aus einem ferrimagnetischen Kernmaterial mit uniaxialer Anisotropie, wie z.B. γ-$Fe_2O_3$ bestehen, und eine gleichfalls magnetische uniaxiale Beschichtung aus Eisen- und Kobaltoxiden aufweisen. Die Herstellung und die Eigenschaften solcher Teilchen sind an sich bekannt und z.B. in den DE—ASen 22 35 383, 19 07 236, DE—PSen 2 243 231, 2 410 517, 2 705 967 sowie der EP—A 14 903 beschrieben. Die so hergestellten höherkoerzitiven und weitgehend uniaxialen Eisenoxide sind im Temperaturverhalten, der Kopierdämpfung und in der Magnetostriktion gegenüber den Multiaxialteilchen verbessert. Für Aufzeichnungen kürzerer Wellenlängen mit sehr schmalen Kopfspalten sind jedoch magnetische Materialien mit uniaxialem Verhalten ungünstig.

Es bestand daher die Aufgabe, magnetische Teilchen als magnetisches Material für magnetische Aufzeichnungsträger bereitzustellen, welche einerseits hohe Koerzitivfeldstärken aufweisen ohne jedoch thermische und mechanische Instabilität zu zeigen und andererseits sich auch für eine Nutzung des magnetischen Aufzeichnungsträgers bei einer Aufzeichnung kurzer Wellenlängen mit einem entsprechend geringen Kopfspalt eignen.

Es wurde nun überraschenderweise gefunden, daß ferrimagnetische Teilchen als Materialien für magnetische Aufzeichnungsträger die aufgabengemäß geforderten Eigenschaften aufweisen, wenn sie im Kern aus einem magnetischen Material mit multiaxialer Anisotropie bestehen und die den Kern umhüllende Beschichtung aus einem magnetischen Material mit uniaxialer Anisotropie aufgebaut ist.

In einer zweckmäßigen Ausgestaltung beteyhen die erfindungsgemäßen ferrimagnetischen Teilchen im Kern aus bezüglich seines Volumens gleichmäßig mit Kobalt(II)-Ionen dotiertem ferrimagnetischem $FeO_x$ mit Werten für x von 1,33 bis 1,50, vorzugsweise von 1,45 bis 1,50. Dabei sind je nach vorgesehenes Verwendungszweck als Kernmaterial sowhl nadelförmige als auch isometrische Teilchen geeignet. Die diesen Kern umhüllende Beschichtung mit uniaxialer Anisotropie weist neben Sauerstoff Kobalt(II)-Eisen-(II)- und Eisen(III)-Ionen auf. Gegebenenfalls enthält das Kern- und/oder Umhüllungsmaterial noch geringe Mengen an Zinkionen, insbesondere 1,2 bis 8 Gew.-%, bezogen auf das Gesamtmaterial.

Die erfindungsgemäßen Teilchen zeigen bezüglich ihrer magnetischen Eigenschaften ein Verhalten, das zwischen demjenigen von rein uniaxialen und dem von rein multiaxialen liegt. Auch die Temperaturabhängigkeit dieser Teilchen ist gegenüber der von Teilchen mit rein multiaxialer Anisotropie wesentlich verbessert.

Zur Herstellung der erfindungsgemäßen ferrimagnetischen Teilchen werden im Volumen gleichmäßig mit Kobalt dotierte, d.h. multiaxiale höherkoerzitive Eisenoxide, z.B. $Fe_3O_4$, γ-$Fe_2O_3$ oder die sog. Berthollide, $FeO_x$ mit Werten für x von 1,33 bis 1,5, als Kernmaterial eingesetzt.

Die Herstellung dieser Magnetoxide ist bekannt. Diese multiaxialen Co-dotierten Eisenoxide werden in an sich bekannter Weise in wäßrigem, alkalischem Milieu unter intensivem Rühren in Gegenwart von Fe(II)- und/oder Co(II)- und gegebenenfalls Zink(II)-Ionen suspendiert, wobei der pH-Wert der Suspension nach der Fällung der Me(II)-Ionen bevorzugt größer 10 beträgt. Die Temperatur liegt dabei im Bereich von 30 bis 100°C, bzw. des Siedepunkts der Suspension. Es hat sich als geeignet erwiesen, eine Reaktionszeit zwischen 1 und 10, bevorzugt zwischen 2 und 8 Stunden, zu wählen. Die Beschichtung des multiaxialen Kernmaterials mit Me(II)-Ionen erfolgt entweder in Abwesenheit von Oxidationsmitteln, Luftsauerstoff kann z.B. durch Inertisierung mit Stickstoff ausgeschlossen werden, oder unter Luftzutritt. In letzterem Fall wird ein Teil der Fe(II)-Ionen oxidativ in Fe(III)-Ionen überführt. Nach der Beschichtung des Co-$FeO_x$-Kerns mit Co(II) und/oder Fe(II) und/oder Fe(III), gegebenenfalls auch Zn(II), werden Feststoff und Mutterlauge voneinander abgetrennt, der Feststoff gewaschen und getrocknet. Die Trocknung erfolgt bei Temperaturen bis etwa 180°C. Liegt die gewählte Trocknungstemperatur oberhalb von 80°C, so erfolgt diese bevorzugt unter Inertgasen, wie z.B. Stickstoff und/oder Edelgasen.

Wesentlicher Verwendungszweck der erfindungsgemäß hergestellten kobalthaltigen magnetischen Eisenoxide stellt der Einsatz als magnetisches Material bei der Herstellung von magnetischen Aufzeichnungsträgern dar. Mit ihnen lassen sich die von Koerzitivfeldstärke und Remanenz beeinflußten Aufzeichnungseigenschaften in überraschender Weise vorteilhaft verändern. Mit ihrer hohen relativen Remanenz in allen drei orthogonalen Richtungen lassen sie sich besonders vorteilhaft bei der Herstellung solcher magnetischer Aufzeichnungsträger heranziehen, mit welchen die Vorteile der Aufzeichnung mittels der wirksamen Vertikalkomponente zur Erhöhung von Bitdichte und zur Speicherung hoher Frequenzen ausgenutzt werden sollen.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele im Vergleich zu Versuchen nach dem Stand der Technik erläutert. In den Vergleichsversuchen werden die erfindungsgemäß hergestellten Magnetteilchen jeweils mit Luft vollständig zu im gesamten Teilchenvolumen mit Kobalt(II), gegebenenfalls Fe(II) und Zn(II), gleichmäßig dotiertem $\gamma$-Fe$_2$O$_3$ mit Multiaxialverhalten oxidiert. So weisen die nach der Oxidation erhaltenen mit Me(II) im Volumen homogen dotierten $\gamma$-Fe$_2$O$_3$-Magnetoxide erhöhte Werte für M$_R$ und VH$_c$-30 auf. Die angegebenen Co(II)- oder Fe(II)-Prozentgehalte beziehen sich als Gew.-% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, H$_c$, gemessen in [kA/m], wurden bei den Pulvermessungen auf eine Stopfdichte von $\rho$=1.2 g/cm$^3$ bezogen. Spezifische Remanenz (M$_r$/$\rho$) und Sättigung (M$_m$/$\rho$) sind jeweils in [nTm$^3$/g] angegeben. Die Sättigung bzw. Remanenz von Bändern werden in [mT] angegeben. Bei streng multiaxialer Anisotropie weisen magnetische Pulver bekannterweise eine relative Remanenz von 0,83, rein uniaxiale System dagegen von 0,50 auf. Liegen also die M$_R$-Werte zwischen 0,50 und 0,83; so kann auf ein mehr oder weniger stark ausgeprägtes Hybridteilchen geschlossen werden.

Die Temperaturabhängigkeit der Koerzitivfeldstärken, ausgedrückt mit der Größe VH$_c$-30 in kAm$^{-1}$/ 10°C, wird wie folgt bestimmt. In einem Schwingmagnetometer wird die Koerzitivfeldstärke der Probe bei 20°C (H$_c$ 1) und nach Aufheizen der Probenkammer auf 40°C (H$_c$ 2) bestimmt. Der Wert VH$_c$-30 errechnet sich zu

$$VH_c\text{-}30 = \frac{H_c1 - H_c2}{2}.$$

Die spezifische Oberfläche S$_{N2}$ der Pigmente wird nach BET in m$^2$/g bestimmt, d.h. an gewogenen evakuierten, gasfreien Pigmentproben wird Stickstoff adsorbiert. Die Differenzmenge Stickstoff vor und nach Adsorption wird in belegte Fläche umgerechnet und ins Verhältnis zur Einwage gesetzt.

Beispiel 1

A: Herstellung von Co-$\alpha$-FeOOH

In einem heizbaren und mit Rührer versehenen Metallbehälter, versehen mit einer Luft- und Stickstoffgaseinleitung, wurden 16,53 kg Na$_2$CO$_3$ in 110 l Wasser gelöst und eine Temperatur von 47°C eingestellt. Danach wurden unter Rühren mit 130 Upm und Einleiten von 480 Nl/h Stickstoff innerhalb 5 Minuten 10 l-Lösung, bestehend aus 302,4 g CoCl$_2$ . 6 H$_2$O, 3 239 g FeCl$_2$ und Wasser hinzugefügt. Zehn Minuten später wurden anstelle des Stickstoffs 300 Nl/h Luft unter Weiterrühren und Aufrechterhaltung von 47°C eingeblasen. Nach 5 Stunden Lufteinleitung war die Oxidation des Fe(II) zu kobaltdotiertem $\alpha$-FeOOH mit spindelförmiger Geometrie beendet. Nach dem Abkühlen der Suspension auf 22°C wurde filtriert, mit Wasser gewaschen und das Co-$\alpha$-FeOOH bei 130°C im Umlufttrockenschrank getrocknet. Probe A 1 (Co-$\alpha$-FeOOH): S$_{N2}$=81,3 m$^2$/g; 3 Gew.-% Co.

B: Herstellung von Co-$\gamma$-Fe$_2$O$_3$ aus Co-$\alpha$-FeOOH (A 1)

Das Co-$\alpha$-FeOOH wurde mit 2,5 Gew.-% Stearinsäure gut durchmischt und die Mischung in einem diskontinuierlichen Drehrohrofen 30 Minuten bei einer Temperatur von 360°C in einem Gasstrom von 100 Nl/h Stickstoff und 100 Nl/h Wasserstoff gehalten. Vor dem Eintritt in den Ofen wurde das Gasgemisch durch Wasser von 60°C geleitet. Das erhaltene Co-haltige Fe$_3$O$_4$ wurde danach in einem Ofen gleicher Bauart innerhalb 30 Minuten bei 360°C in einem Luftstrom von 100 Nl/h zu Co-$\gamma$-Fe$_2$O$_3$ oxidiert.

Probe B 1: Hc=65 kA/m      S$_{N2}$=21,4 m$^2$/g
M$_m$/$\rho$=83 nTm$^3$/g      pH-Wert=9,2
M$_r$/$\rho$=67 nTm$^3$/g      Co: 3,4 Gew.-%
M$_r$/M$_m$=0,81.

C: Kobaltbeschichtung des Co-$\gamma$-Fe$_2$O$_3$ (B 1)

C.1 Unter intensivem Rühren und Inertisierung des Reaktionsgefäßes mit Stickstoff während der gesamten Reaktionsdauer wurden 60 g Co-γ-Fe$_2$O$_3$ in 300 ml Wasser unter Zusatz von 4 Gew.-% Co als CoCl$_2$ . 6 H$_2$O dispergiert und nach 30 Minuten Dauer eine Temperatur von 50°C eingestellt. Dann wurden 38 ml einer 31,3% FeCl$_2$-Lösung, entsprechend 12 Gew.-% Fe(II) bezogen auf Co-γ-Fe$_2$O$_3$, hinzugefügt und 10 Minuten später noch 50 ml einer 50 %igen wäßrigen Natronlauge eingebracht. Nach sechsstündigem Rühren bei 50°C wurde auf 22°C abgekühlt, filtriert, mit Wasser gewaschen und der Filterkuchen im Vakuumtrockenschrank bei 80°C getrocknet (Probe C 1).

C.2 Durchführung wie unter C 1, jedoch mit 6 Gew.-% Co(II) und 16 Gew.-% Fe(II), jeweils bezogen auf Co-γ-Fe$_2$O$_3$ (Probe C 2).

C.3. Durchführung wie unter C 1, jedoch mit 8 Gew.-% Co(II) und 20 Gew.-% Fe(II), jeweils bezogen auf Co-γ-Fe$_2$O$_3$ (Probe C 3).

Die magnetischen Eigenschaften und die Temperaturabhängigkeit der Koerzitivkraft, ausgedrückt als VH$_c$-30, sind in der Tabelle 1 zusammengestellt.

Vergleichsversuch 1

Um das erfindungsgemäße Teilchensystem aus Vergleichsgründen erneut in ein rein multiaxiales System zu überführen, wurden Teile der Proben C 1, C 2 und C 3 in einem Gasstrom von 50 Nl Luft/h bei 380°C innerhalb 30 Minuten oxidiert. Die Eigenschaften der erhaltenen Vergleichsproben C 1-Ox, C 2-Ox und C 3-Ox sind gleichfalls in der Tabelle 1 enthalten.

TABELLE 1

| Probe | Co-Dotierung α-FeOOH (%) | Hülle (%) | Fe(II) a) bei Dot. b) nach Oxidation | Bemerkung bzw. Trocknen Oxidieren | Hc (kA/m) | M$_r$/M$_m$ | M$_r$/ρ (nTm$^3$/g) | VH$_c$-30 (kA/m/10°C) |
|---|---|---|---|---|---|---|---|---|
| B 1 | 3,2 | — | b) <0,2 | Einsatzp. | 65 | 0,81 | 67 | 7,1 |
| C 1 | 3,2 | 4 | a) 12 | 80°C | 108 | 0,68 | 52 | 6,8 |
| C 1-Ox | | | b) <1 | 380°C | 106 | 0,87 | 60 | 10,9 |
| C 2 | 3,2 | 6 | a) 16 | 80°C | 110 | 0,70 | 70 | 6,7 |
| C 2-Ox | | | b) <1 | 380°C | 111 | 0,86 | 63 | 10,2 |
| C 3 | 3,2 | 8 | a) 20 | 80°C | 105 | 0,71 | 64 | 6,6 |
| C 3-Ox | | | b) <1 | 380°C | 113 | 0,86 | 59 | 8,0 |

Beispiel 2

A) In einem 10-l-Glasgefäß, versehen mit Rückflußkühler, Rührer und pH-Elektrode, wurden 1 211 g FeSO$_4$ . 7 H$_2$O und 16,8 g CoSO$_4$ . 7 H$_2$O unter Rühren mit Wasser zu einem Gesamtvolumen von 6 l Lösung gelöst und mit 3,2 ml konzentrierter Schwefelsäure verstezt. Dann wurden 5,4 g NaH$_2$PO$_4$ . 2 H$_2$O hinzugefügt. Gleichzeitig wurde die Lösung mit 300 Nl Stickstoff/h begast und eine Temperatur von 50°C eingestellt. Dann wurden 575 ml einer 15,7 %igen Natronlauge in 10 Minuten zugegeben. Der Ausfällgrad betrug 30%, bezogen auf Me(II).

Nun wurden anstelle von Stickstoff 600 Nl Luft/h eingeleitet bis der pH-Wert nach 45 Minuten auf kleiner als 4 abgefallen war. Zehn Minuten nach diesem Zeitpunkt wurde bei 50°C und weiterer Lufteinleitung und Rühren durch Zutropfen von 15,7 %iger Natronlauge der pH-Wert auf 5,1 gebracht und während der gesamten Wachstumsphase bei 5,1 bis 5,2 gehalten. Dauer der Wachstumsphase: 110 Minuten. Nun wurde die Suspension auf 30°C abgekühlt und mit 15,7 %iger Natronlauge ein pH-Wert von 9,5 eingestellt. Nach zweistündigem Nachrühren wurde filtriert, der Filterkuchen mit Wasser gewaschen bis das Filtrat SO$_4$$^{2-}$ frei war. Schließlich wurde der Filterkuchen bei 110°C getrocknet. Die Daten der so erhaltenen Probe A 2 sind in der Tabelle 2 angegeben.

Proben A 3, A 4, A 5 und A 6:

Es wurde wie im Beispiel 2 unter A beschrieben verfahren, jedoch wurde das Verhältnis von Fe(II):Co(II) in der in der Tabelle 2 angegebenen Weise variiert. Im Co-α-FeOOH wurden dabei im Mittel jeweils 0,8 Gew.% PO$_4$$^{3-}$-Ionen nachgewiesen. Die Tabelle 2 gibt einen Überblick über Reaktionsbedingungen und Resultate.

## TABELLE 2

| Beispiel 2 Probe: | FeSO$_4$ . 7 H$_2$O (g) | CoSO$_4$ . 7 H$_2$O (g) | Vorlage Co(II)[1] (Gew.-%) | Synthesedauer Keimphase (min.) | Wachstum (min.) | S$_{N2}$ im Co-α-FeOOH (m²/g) |
|---|---|---|---|---|---|---|
| A 2 | 1 211 | 16,8 | 0,9 | 45 | 110 | 44 |
| A 3 | 1 207 | 22,4 | 1,2 | 45 | 100 | 46 |
| A 4 | 1 202 | 29,9 | 1,6 | 45 | 105 | 62 |
| A 5 | 1 197 | 37,3 | 2,0 | 40 | 95 | 60 |
| A 6 | 1 191 | 46,7 | 2,5 | 40 | 100 | 66 |

[1] bezogen auf die Menge α-FeOOH, die aus der Menge an FeSO$_4$ . 7 H$_2$O entstehen kann.

B) Jeweils 120 g Co-α-FeOOH der Proben A 2 bis A 6 wurden in einem Drehrohrofen innerhalb 30 Minuten bei 440°C in einem Wasserstoffvolumenstrom von 100 Nl/h zu Co-Fe$_3$O$_4$ reduziert. Vor dem Eintritt in das Reduktionsrohr wurde der H$_2$-Strom durch Wasser einer Temperatur von 60°C hindurchgeleitet. Nach beendeter Reduktion wurde die Magnetitprobe in einem Ofen gleicher Bauart innerhalb 30 Minuten bei 320°C in einem Luftvolumenstrom von 50 Nl/h zu Co-γ-Fe$_2$O$_3$ oxidiert. Die Eigenschaften der Co-γ-Fe$_2$O$_3$-Proben B 2 bis B 6 sind in Tabelle 3 aufgeführt.

## TABELLE 3

| Probe | Einsatzprodukt Probe | H$_c$ | M$_r$/ρ | M$_r$/M$_m$ |
|---|---|---|---|---|
| B 2 | A 2 | 21 | 42 | 0,54 |
| B 3 | A 3 | 24 | 47 | 0,57 |
| B 4 | A 4 | 28 | 51 | 0,61 |
| B 5 | A 5 | 34 | 56 | 0,68 |
| B 6 | A 6 | 42 | 62 | 0,75 |

C) Wie in Beispiel 1 unter C 1 beschrieben, wurden jeweils 60 g der Proben B 2 bis B 6 mit den in Tabelle 4 angegebenen Mengen an Co(II)-Ionen aus Kobaltchlorid und Fe(II)-Ionen aus Eisen(II)chlorid beschichtet.

## TABELLE 4

| Beispiel | Einsatzprodukt | Fe(II) Gew.-% bez. auf Einsatzprodukt | Co(II) Gew.-% bez. auf Einsatzprodukt |
|---|---|---|---|
| C 4 | B 2 | 6 | 2 |
| C 5 | B 3 | 15 | 5 |
| C 6 | B 4 | 6 | 2 |
| C 7 | B 5 | 15 | 5 |
| C 8 | B 6 | 0 | 2 |

Die Eigenschaften der Magnetoxide sind in der Tabelle 5 angegeben.

5

**Vergleichsversuch 2**

Es wurden Teile der Proben C 4 bis C 8 innerhalb von 30 Minuten bei 320°C in einem Luftstrom von 50 Nl/h oxidiert. Die Eigenschaften der resultierenden Proben C 4-Ox bis C 8-Ox sind gleichfalls in Tabelle 5 angegeben.

TABELLE 5

| Probe | $H_c$ | $M_r/\rho$ | $M_r/M_m$ | $VH_c$-30 |
|---|---|---|---|---|
| C 4 | 35 | 50 | 0,57 | — |
| C 4-Ox | 30 | 54 | 0,62 | — |
| C 5 | 64 | 54 | 0,65 | — |
| C 5-Ox | 52 | 60 | 0,74 | — |
| C 6 | 39 | 51 | 0,58 | 4,2 |
| C 6-Ox | 40 | 62 | 0,72 | 5,3 |
| C 7 | 71 | 55 | 0,67 | 4,6 |
| C 7-Ox | 72 | 69 | 0,85 | 6,8 |
| C 8 | 45 | 57 | 0,72 | 4,2 |
| C 8-Ox | 52 | 65 | 0,80 | 5,0 |

**Beispiel 3**

In der im Beispiel 2 unter A beschriebenen 10-l-Glasapparatur wurden 1 112 g $FeSO_4 . 7 H_2O$ mit Wasser zu 6 l-Lösung aufgelöst. Unter Rühren wurden 3,2 ml konz. $H_2SO_4$ und danach 5,4 g $NaH_2PO_4 . 2 H_2O$ hinzugefügt. Gleichzeitig wurde die Lösung mit 300 Nl/h Stickstoff begast und die Temperatur auf 20°C geregelt. Danach wurden 1 235 ml einer 15 %igen NaOH (5,6 Mol) innerhalb von 5 Minuten hinzugegeben. Dies entspricht einem Ausfällgrad von 70%, bezogen auf die Me(II)-Ionen.

Nun wurde anstelle von Stickstoff 600 Nl Luft/h bei 20°C eingeleitet, bis der pH-Wert auf kleiner 4 abgefallen war (260 Minuten). Anstelle von Luft wurde nun erneut Stickstoff eingeleitet und 167,8 g $CoSO_4 . 7 H_2O$, gelöst in 200 ml Wasser eingebracht. Mit NaOH wurde dann der pH-Wert auf 12 gestellt, die Suspension unter $N_2$ auf 68°C erhitzt und 3 Stunden bei dieser Temperatur gehalten. Nach dem Abkühlen auf 22°C wurde filtriert, mit Wasser gewaschen und der Filterkuchen bei 50°C im Vakuumtrockenschrank getrocknet.

100 g dieser Probe A 7, einem kobaltdotierten isometrischen Magnetit, wurden innerhalb von 30 Minuten bei 360°C mit Luft oxidiert (kobaltmodifiziertes Gamma-Eisen(III)oxid, Probe B 7).

Diese Probe B 7 wurde wie in Beispiel 1 unter C 1 beschrieben, mit einer 9 Gew.-% Eisen(II)- und 3 Gew.-% Kobalt(II)-Ionen aufweisenden Beschichtung versehen (Probe C 9).

Die Eigenschaften dieser Proben sind in Tabelle 6 angegeben.

TABELLE 6

| Probe | $H_c$ | $M_m/\rho$ | $M_r/\rho$ | $M_r/M_m$ |
|---|---|---|---|---|
| A 7 | 56,0 | 87 | 52 | 0,59 |
| B 7 | 104,0 | 74 | 59 | 0,79 |
| C 9 | 110,0 | 70 | 50 | 0,71 |

**Beispiel 4**

In einer mit 100 Teilen Stahlkugeln (2 mm Durchmesser) gefüllten Kugelmühle mit einem Füllvolumen von 250 Volumenteilen, wurden jeweils 50 Teilen der in Tabelle 7 angegebenen magnetischen Eisenoxide, 3 Teile eines langkettigen, amphoteren, organophilen Dispergierhilfsmittels, 0,05 Teile eines Siliconöls und 0,5 Tiele eines isomeren Carbonsäuregemisches, 6,6 Teile eines handelsüblichen isocyanatfreien Polyesterurethans aus Adipinsäure, Butandiol-1,4 und 4,4-Dicyanatodiphenylmethan mit einem K-Wert von 6 1 (gemessen als 1 %ige Lösung in Tetrahydrofuran) und 25 Teile eines Vinylchlorid-Maleinsäuremethylester-Copolymeren mit einem K-wert von 59 (ebenfalls als 1 %ige Lösung in Tetrahydrofuran gemessen) sowie 78 Teile eines Gemisches aus gleichen Teilen von Tetrahydrofuran und 1,4-Dioxan zugegeben, wobei die Eingabe der angegebenen Bindemittel in Form ihrer Lösung in dem genannten Lösemittelgemisch erfolgte. Nach einer Dispergierdauer von 3,5 Stunden wurde die Magnetdispersion filtriert und anschließend mit einer üblichen Beschichtungseinrichtung auf eine 12 µm dicke Polyethylenterephthalatfolie gegossen, so daß nach Trocknung in einem Trockenkanal und anschließendem Glättevorgang mit auf 80°C beheiztem Mehrwalzenkalander eine Schichtdicke von 5,2 µm erzielt wurde. Die an der Magnetschicht gemessenen magnetischen Eigenschaften sind in Tabelle 7 angegeben.

TABELLE 7

| Eingesetztes Eisenoxid Probe | $H_c$ | $M_r$ | $M_r/M_m$ | $VH_c$-30 |
|---|---|---|---|---|
| C 6 | 36 | 129 | 0,66 | 3,8 |
| C 6-Ox | 42 | 152 | 0,82 | 6,0 |
| C 7 | 63 | 132 | 0,68 | 5,9 |
| C 7-Ox | 70 | 160 | 0,81 | 8,2 |
| C 8 | 47 | 143 | 0,81 | 5,9 |
| C 8-Ox | 55 | 151 | 0,86 | 9,5 |

Beispiel 5

In der im Beispiel 2 unter A beschriebenen 10-l-Glasapparatur wurden bei 20°C und unter Durchleiten von 300 Nl Stickstoff/h und Rühren 1 269 ml einer technischen 30,8 %igen FeCl$_2$-Lösung vorgelegt. Nach der Zugabe von 55,26 g CoCl$_2$ . 6 H$_2$O und 14,3 g ZnCl$_2$ wurde Wasser hinzugefügt bis das Volumen der Lösung 6 l betrug.

Danach wurden 1 371 ml 15,1 %ige Natronlague innerhalb 8 Minuten eingebracht und noch 10 Minuten nachgerührt.

Anschließend wurden bei 20°C anstelle von Stickstoff 600 Nl Luft/h eingeleitet bis der pH-Wert der Suspension nach 140 Minuten auf den Wert 4 abgefallen war. Dann wurde 10 Minuten nachgerührt, wobei anstelle von Luft erneut Stickstoff eingeleitet wurde. Nun wurde unter Aufrechterhaltung der Stickstoffleitung mit NaOH ein pH-Wert von 9,5 eingestellt und innerhalb 150 Minuten auf 80°C aufgeheizt. Die Temperatur von 80°C wurde 3 Stunden lang gehalten, danach die Suspension über Nacht auf 22°C abgekühlt. Nach dem Filtrieren, Waschen und Trocknen bei 50°C in einem Vakuumtrockenschrank wurde die Probe A 8 erhalten. Die chemische Analyse von A 8 ergab einen Gehalt von 3,4 Gew.-% Kobalt und 1,7 Gew.-% Zink.

100 g der Probe A 8 wurden in einem Luftstrom von 50 Nl/h innerhalb 30 Minuten bei 350°C in einem Drehrohrofen zur Probe A 8-Ox oxidiert.

40 g der Probe A 8-Ox wurden, wie im Beispiel 1 unter C 1 beschrieben, mit 4 Gew.-% Co(II) und 12% Fe(II) beschichtet. Hierzu wurden die Metallchloride, 200 ml Wasser und 35 ml einer 48 %igen NaOH verwendet. Nach der Vakuumtrocknung wurde die Probe C 10 erhalten.

Die Eigenschaften der Proben A 8, A 8-Ox, C 10 sind in der Tabelle 8 angegeben.

TABELLE 8

| Probe | $H_c$ | $M_m/\rho$ | $M_r/\rho$ | $M_r/M_m$ | $VH_c$-30 |
|---|---|---|---|---|---|
| A 8 | 30 | 95 | 55 | 0,58 | — |
| A 8-Ox | 50 | 84 | 66 | 0,78 | 7,3 |
| C 10 | 62 | 80 | 48 | 0,61 | — |

# EP 0 178 588 B1

**Patentansprüche**

1. Ferrimagnetische Teilchen, welche sich als magnetisches Material für magnetische Aufzeichnungsträger eignen, dadurch gekennzeichnet, daß sie aus einem Kern aus einem magnetischen Material mit multiaxialer Anisotropie und einer den Kern umhüllenden Beschichtung aus einem magnetischen Material mit uniaxialer Anisotropie bestehen.

2. Ferrimagnetische Teilchen gemäß Anspruch 1, dadurch gekennzeichnet, daß das magnetische Kernmaterial ein bezüglich seines Volumens gleichmäßig mit Kobalt(II)-Ionen dotiertes, ferrimagnetisches $FeO_x$ mit Werten für x von 1,33 bis 1,50, ist.

3. Ferrimagnetische Teilchen gemäß Anspruch 1, dadurch gekennzeichnet, daß die magnetische, den Kern umhüllende Beschichtung mit uniaxialer Anisotropie neben Sauerstoff aus Co(II)-, Fe(II)- und Fe(III)-Ionen besteht.

4. Ferrimagnetische Teilchen gemäß den Ansprüchen 1 bis 3, dadurch gekennzeichnet, daß als weiteres Metallion Zn(II)-Ionen im magnetischen Kern und/oder in der magnetischen Beschichtung enthalten sind.

5. Verfahren zur Herstellung ferrimagnetischer Teilchen nach einem der Ansprüche 1 bis 4, dadurch gekennzeichnet, daß ein in seinem Volumen gleichmäßig mit Co(II)-Ionen dotiertes, ferrimagnetisches $FeO_x$ mit Werten für x von 1,33 bis 1,50 in einem wäßrigen Medium in inerter oder oxidierend wirkender Umgebung mit Fe(II)- und/oder Co(II)-Hydroxiden beschichtet und nach der Abtrennung von der wäßrigen Phase gewaschen und getrocknet wird.

6. Verfahren gemäß Anspruch 5, dadurch gekennzeichnet, daß das ferrimagnetische Kernmaterial neben Co(II)-Ionen noch Zinkionen enthält und/oder diese bei der Herstellung der magnetischen Beschichtung neben Co(II) und Fe(II)-Ionen zugegen sind.

**Revendications**

1. Particules ferrimagnétiques qui sont appropriées comme matériau magnétique pour supports d'enregistrement magnétiques, caractérisées par le fait qu'elles sont constituées d'un noyau en un matériau magnétique d'anisotropie multraxiale et d'un revêtement entourant le noyau en un matériau magnétique d'anisotropie uniaxiale.

2. Particules ferrimagnétiques selon la revendication 1, caractérisées par le fait que le matériau magnétique du noyau est $FeO_x$ ferrimagnétique, de valeurs pour x comprises entre 1,33 et 1,50, dopé uniformément, relativement à son volume, avec des ions cobalt (II).

3. Particules ferrimagnétiques selon la revendication 1, caractérisées par le fait que le revêtement magnétique d'anisotropie uniaxiale, entourant le noyau est constitué, outre d'oxygène, d'ions Co(II)-, Fe(II)- et Fe(III).

4. Particules ferrimagnétiques selon les revendications 1 à 3, caractérisées par le fait que, comme autres ions métalliques, sont contenus dans le noyau magnétique et/ou dans le revêtement magnétique, des ions Zn(II).

5. Procédé de préparation de particules ferrimagnétiques selon l'une des revendications 1 à 4, caractérisé par le fait qu'on revêt d'hydroxydes de Fe(II) et/ou Co(II), en milieu aqueux, dans un environnement inerte ou à action oxydante, un $FeO_x$ ferrimagnétique, de valeurs pour x comprises entre 1,33 et 1,50, dopé uniformément, relativement à son volume, avec des ions cobalt (II) et, après séparation de la phase aqueuse, on le lave et on le sèche.

6. Procédé selon la revendication 5, caractérisé par le fait que le matériau ferrimagnétique du noyau contient, outre des ions Co(II), encore des ions zinc et/ou ceux-ci sont ajoutés, à côté des ions Co(II) et Fe(II), lors de la préparation du revêtement magnétique.

**Claims**

1. Ferrimagnetic particles which are useful as magnetic material for magnetic recording media, which particles consist of a core of a magnetic material exhibiting multiaxial anisotropy and a coating which surrounds the core and is composed of a magnetic material possessing uniaxial anisotropy.

2. Ferrimagnetic particles as claimed in claim 1, wherein the magnetic core material is a ferrimagnetic $FeO_x$ which is doped uniformly throughout its volume with cobalt(II) ions and in which x is from 1.33 to 1.50.

3. Ferrimagnetic particles as claimed in claim 1, wherein the magnetic coating which surrounds the core and possesses uniaxial anisotropy consists of Co(II) ions, Fe(II) ions and Fe(III) ions in addition to oxygen.

4. Ferrimagnetic particles as claimed in any of claims 1 to 3, wherein Zn(II) ions are present, as further metal ions, in the magnetic core or coating.

5. A process for the preparation of ferrimagnetic particles as claimed in any of claims 1 to 4, wherein a ferrimagnetic $FeO_x$ which is doped uniformly throughout its volume with Co(II) ions and in which x is from

1.33 to 1.50 is coated with Fe(II) hydroxide or Co(II) hydroxide in an aqueous medium in an inert or oxidizing environment, and the product is isolated from the aqueous phase, washed and dried.

6. A process as claimed in claim 5, wherein the ferrimagnetic core material contains not only Co(II) ions but also zinc ions and/or these ions are present in addition to Co(II) and Fe(II) ions during the preparation of the magnetic coating.